# FASCICULE DE BREVET EUROPEEN

(11) **EP 3 488 094 B1**
(45) Date de publication et mention de la délivrance du brevet: **22.04.2020**
(21) Numéro de dépôt: 17754396.4
(22) Date de dépôt: 20.07.2017
(51) Int. Cl.: F02K 1/12

(54) **SYSTÈME D'ACTIONNEMENT D'UN PANNEAU DE NACELLE DE TURBORÉACTEUR**
SYSTEM ZUR BETÄTIGUNG EINER PLATTE EINER TURBOSTRAHLTRIEBWERKSGONDEL
SYSTEM FOR ACTUATING A PANEL OF A TURBOJET ENGINE POD

(30) Priorité: 25.07.2016 FR 1657124
(43) Date de publication de la demande: 29.05.2019
(73) Titulaire: Safran Nacelles, 76700 Gonfreville-l'Orcher (FR)
(72) Inventeur: GONIDEC, Patrick, 76700 GONFREVILLE L'ORCHER (FR); CHAPELAIN, Loïc, 76700 GONFREVILLE L'ORCHER (FR); BOUABDALLAH, Faycel, 76700 GONFREVILLE L'ORCHER (FR)
(74) Mandataire: Chevalier, Renaud Philippe
(86) Numéro de dépôt international: PCT/FR2017/051995
(87) Numéro de publication internationale: WO 2018/020111

(56) Documents cités:
- EP-A1- 2 987 991
- WO-A1-2015/001276

## Description

La présente invention concerne le domaine des nacelles pour turboréacteurs d'aéronefs.

Un aéronef est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval destinée à entourer la chambre de combustion du turboréacteur et à constituer la tuyère d'éjection de l'écoulement de soufflante du moteur ne traversant pas la chambre de combustion (flux secondaire). Cette tuyère est communément appelée veine secondaire ou canal flux froid de la nacelle. Cette partie inclut souvent un inverseur de poussée, dispositif permettant d'obtenir un freinage aérodynamique de l'avion lors de l'atterrissage en renvoyant le flux secondaire vers l'avant.

Cette nacelle est destinée à abriter un turboréacteur double flux apte à générer par l'intermédiaire des aubes de la soufflante en rotation un flux d'air chaud (également appelé flux primaire), issu de la chambre de combustion du turboréacteur, et un flux d'air froid (flux secondaire) déjà cité plus haut. La section de sortie de cette tuyère est délimitée par le bord de fuite externe de la nacelle et le corps central de cette nacelle. Cette section d'éjection secondaire contrôle le débit d'air passant dans la tuyère secondaire et donc régit dans une marge mesure le fonctionnement du moteur.

La section optimale de la tuyère d'éjection peut être adaptée en fonction des différentes phases de vol, à savoir les phases de décollage, de montée, de croisière, de descente et d'atterrissage de l'avion. Il est en effet utile de pouvoir augmenter cette section lors des phases de décollage et d'atterrissage, et de la réduire pendant les phases de croisière : on parle souvent de tuyère à section de sortie variable, ou bien encore de « VFN » ou « VAFN », acronyme anglo-saxon de « Variable Fan Nozzle » ou «Variable Area Fan Nozzle ». Les avantages déjà bien connus de telles tuyères à section variable, également appelées tuyères adaptatives, sont notamment la réduction de bruit ou la diminution de consommation de carburant. Outre cela elle permet aussi d'assurer le fonctionnement du moteur en évitant le pompage moteur (trop de taux de compression avec trop peu de débit entraîne une ouverture de la VAFN) ou les survitesses au niveau de redresseur de soufflante (trop de débit dans la veine secondaire entraîne une fermeture de la section de sortie).

Des exemples de réalisation de tuyères adaptatives selon l'art antérieur sont par exemple donnés aux documents EP 2 987 991 A1 et WO 2015/001276 A1.

Parmi les différents modes de réalisation de tuyères d'éjection de l'art antérieur, il est notamment connu de réaliser la variation de la section de sortie de la tuyère à partir de panneaux pivotants positionnés à une extrémité aval du capot coulissant d'inverseur, montés en rotation autour d'un axe sensiblement transverse à un axe longitudinal de la nacelle. Le pivotement de ces panneaux entraîne une variation de la section de la tuyère secondaire. Cette rotation est souvent couplée avec une translation permettant d'améliorer l'aérodynamique du dispositif.

Les panneaux de tuyère, parfois appelés « portes » ou encore « volets », sont typiquement associés à un système d'actionnement piloté par le système de contrôle moteur. Dans ce cas il importe donc de pouvoir actionner le capot d'inverseur et les panneaux de la tuyère adaptative de manière indépendante. En particulier, les systèmes de maintien de l'inverseur en position de vol repliée ne doivent en aucun cas être impactés par le fonctionnement de la tuyère variable.

Pour réaliser cet actionnement indépendant, chaque partie mobile de la nacelle (capot d'inverseur, panneaux de tuyère) peut être équipée de son propre système d'actionnement, et être ainsi entraînée de manière indépendante. On parle ici d'actionnement ségrégué des panneaux de la tuyère et du capot d'inverseur.

Une alternative à ce mode de fonctionnement ségrégué consiste à mutualiser les systèmes d'actionnement du capot d'inverseur et des panneaux de tuyère. On utilise pour ce faire un unique système d'actionneurs pour le capot d'inverseur et pour les panneaux de tuyère, et on équipe l'inverseur de poussée de moyens de verrouillage/déverrouillage et d'un système d'accouplement des actionneurs de l'inverseur avec les portes de tuyère conçus pour autoriser le mouvement des panneaux de la tuyère indépendamment de la position (verrouillée) du capot coulissant d'inverseur. Les actionneurs sont alors munis d'un système permettant un déplacement des portes sans bouger le capot coulissant de l'inverseur et a contrario ce système ne bougera pas les panneaux de la tuyère lors d'un déploiement de l'inverseur.

Quel que soit le système d'actionnement retenu, ségrégué ou mutualisé, l'actionnement des panneaux de la tuyère est réalisé au moyen d'un ou plusieurs actionneurs sensiblement parallèles à l'axe longitudinal de la nacelle, ces actionneurs commandant, via un système de renvoi du mouvement (par exemple un embiellage approprié), la mise en rotation d'un ou de plusieurs panneau(x) de la tuyère. Ainsi, les efforts engendrés au niveau des actionneurs lors de la mise en rotation de ces panneaux de tuyère sont orientés le long de l'axe longitudinal de la nacelle, et sont transmis notamment à la structure de la nacelle qui avoisine les panneaux mobiles de la tuyère. Ces efforts longitudinaux engendrés par la mise en rotation des panneaux de tuyère se révèlent très pénalisants car ils peuvent entraîner un écopage axial générant des déformées de la structure de la nacelle qui avoisine les panneaux mobiles de la tuyère. L'effet d'écopage se trouve par ailleurs encore sensiblement augmenté lorsque le capot d'inverseur de poussée de la nacelle est un capot de type « O-duct », c'est-à-dire un capot se présentant sous la forme d'une virole monobloc.

La présente invention vise à résoudre ces inconvénients de l'art antérieur, et vise en particulier à réduire sensiblement les efforts induits au niveau des actionneurs des portes de tuyère variable.

Pour ce faire, la présente invention concerne une nacelle pour turboréacteur d'aéronef, comprenant :
- un capotage externe, comprenant :
   ∘ une structure, comprenant au moins une ouverture,
   ∘ au moins un panneau, au moins monté pivotant autour d'un axe entre une position de fermeture selon laquelle il obture ladite ouverture et une position d'ouverture selon laquelle il autorise le passage d'une partie d'un flux d'air secondaire à travers ladite ouverture, le flux d'air secondaire s'écoulant dans un canal annulaire défini entre ledit capotage externe et une structure interne fixe de la nacelle définissant un carénage du turboréacteur,
- un système d'actionnement du panneau, conçu pour verrouiller le panneau dans ladite position de fermeture et pour déplacer ledit panneau alternativement entre ladite position de fermeture et ladite position d'ouverture, ladite nacelle étant remarquable en ce que ledit système d'actionnement comprend :
- au moins une bielle latérale, d'une part reliée au panneau et d'autre part reliée à la structure du capotage externe, ladite bielle latérale étant montée pivotante par rapport à ladite structure, d'une part autour d'un premier axe de pivotement sensiblement parallèle à un axe longitudinal de la nacelle, et d'autre part autour d'un deuxième axe de pivotement sensiblement perpendiculaire au premier axe de pivotement,
- un actionneur linéaire, attaché à ladite bielle latérale, susceptible de passer alternativement entre une position rétractée et une position allongée,
le système d'actionnement étant en outre conçu pour déplacer la bielle latérale lors de l'allongement dudit actionneur, entraînant le pivotement de ladite bielle latérale autour desdits premier et deuxième axes de pivotement, et pour que la bielle latérale, en appui sur ladite structure, exerce, lors de son déplacement, une force sur le panneau, entraînant un pivotement dudit panneau autour de son axe.

Ainsi, lors de l'ouverture du panneau, les efforts sont repris par les bielles latérales du système d'actionnement et non par l'actionneur longitudinal comme c'est le cas dans l'art antérieur. Les efforts sont donc répartis sensiblement le long de la circonférence de la nacelle. Les efforts sur la structure de du capotage externe de la nacelle qui avoisine les panneaux mobiles sont ainsi sensiblement circonférentiels, et sensiblement alignés avec les efforts de pression sur le panneau.

Selon une caractéristique de la nacelle selon l'invention :
- l'actionneur est attaché à la bielle latérale au moyen d'un dispositif de renvoi de mouvement comprenant:
   ∘ une chape attachée d'une part au panneau et montée pivotante autour d'un axe sensiblement vertical, une tige mobile de l'actionneur étant attaché à ladite chape ; et
   ∘ un croisillon sur lequel est montée via une liaison rotule une deuxième extrémité de la bielle latérale ;

Selon un mode de réalisation de l'invention, le panneau est en outre monté libre en translation selon un axe sensiblement parallèle à un axe longitudinal de la nacelle et le système d'actionnement est en outre conçu pour entraîner alternativement le panneau depuis une position aval vers une position amont de la nacelle lorsque le panneau passe de sa position de fermeture vers sa position d'ouverture. Cette configuration permet d'améliorer sensiblement le comportement aérodynamique du système en évitant de créer un convergent divergent trop marqué qui induit des pertes importantes dans le canal de VFN.

A cet effet, au moins une paroi latérale du panneau comporte un trou oblong dans lequel est monté un galet solidaire de la structure du capotage externe, de sorte à autoriser la translation du panneau mobile le long d'un axe sensiblement parallèle à l'axe longitudinal de la nacelle, et le système d'actionnement comprend une bielle longitudinale dont une première extrémité est reliée à ladite structure et dont une deuxième extrémité est reliée à la chape du dispositif de renvoi de mouvement.

En variante, au moins une paroi latérale du panneau comporte un rail recevant une rotule ou un coulisseau solidaire de la structure du capotage externe, de sorte à autoriser la translation du panneau mobile le long d'un axe sensiblement parallèle à l'axe longitudinal de la nacelle, et en ce que le système d'actionnement comprend une bielle longitudinale dont une première extrémité est reliée à ladite structure et dont une deuxième extrémité est reliée à la chape du dispositif de renvoi de mouvement.

Selon des caractéristiques structurelles de la nacelle selon l'invention :
- une première extrémité de la bielle latérale est reliée à la structure du capotage externe par l'intermédiaire d'une chape montée pivotante autour du premier axe de pivotement ;
- la bielle latérale est en outre montée pivotante par rapport à la chape autour du deuxième axe de pivotement ;
- le panneau comporte une lumière profilée sur au moins une paroi latérale du panneau, la bielle latérale traversant ladite lumière ;
- l'actionneur est attaché à une paroi amont du panneau ;
- l'actionneur et le dispositif de renvoi de mouvement sont situés dans un espace interne du panneau ;
- chaque panneau comporte préférentiellement deux systèmes d'actionnement symétriques par rapport à un axe de symétrie du panneau, comprenant chacun leur propre moteur d'actionnement hydraulique, électrique ou aéraulique ;
- le panneau est en outre mû en translation selon une direction sensiblement parallèle à un axe longitudinal de la nacelle, et le système d'actionnement est en outre conçu pour entraîner alternativement le panneau depuis une position aval vers une position amont de la nacelle lorsque le panneau passe de sa position de fermeture vers sa position d'ouverture ;
- le panneau est un panneau d'une tuyère d'éjection d'un flux d'air secondaire ;
- le capotage externe forme un capot coulissant d'un dispositif d'inversion de poussée.

D'autres caractéristiques et avantages de l'invention apparaîtront à la lecture de la description détaillée qui suit pour la compréhension de laquelle on se reportera aux dessins annexés dans lesquels :
- la figure 1 représente une nacelle équipée de panneaux mobiles susceptibles d'être mis en mouvement par le système d'actionnement de l'invention (non représenté) ;
- la figure 2 est une vue de la zone II de la figure 1, le panneau étant en position de fermeture ;
- la figure 3 est une vue similaire à celle de la figure 2, le panneau se trouvant en position d'ouverture ;
- les figures 4 à 6 représentent le système d'actionnement réalisé selon un premier mode de réalisation de l'invention, le panneau se trouvant en position de fermeture ;
- les figures 7 à 9 représentent le système d'actionnement du premier mode de réalisation, le panneau se trouvant en position d'ouverture ;
- la figure 10 illustre la cinématique du système d'actionnement de l'invention lorsque le système déplace le panneau depuis sa position de fermeture jusqu'à sa position d'ouverture ;
- la figure 11 représente le système d'actionnement réalisé selon un deuxième mode de réalisation de l'invention, le panneau se trouvant en position de fermeture ;
- la figure 12 représente le système d'actionnement du deuxième mode de réalisation, le panneau se trouvant en position d'ouverture.

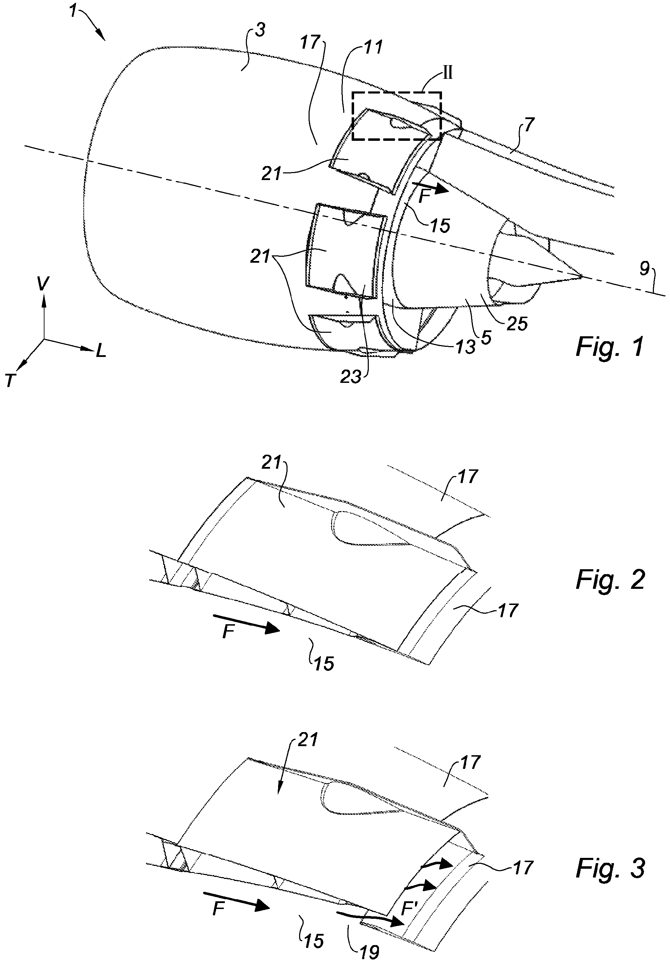

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal de la nacelle.

En outre, sur l'ensemble des figures, des références identiques ou analogues représentent des organes ou ensembles d'organes identiques ou analogues.

On se réfère à la figure 1 sur laquelle est représentée un ensemble propulsif 1 formé par une nacelle 3 et un turboréacteur 5 double flux, suspendu à une structure fixe (non représentée) de l'avion, par exemple sous une aile ou sur le fuselage, par l'intermédiaire d'un pylône 7 ou mât.

La nacelle 3 constitue un logement du turboréacteur 5 double flux et sert à canaliser les flux d'air qu'il génère par l'intermédiaire des pâles d'une soufflante (non visible), à savoir un flux d'air chaud traversant une chambre de combustion du turboréacteur 5, et un flux d'air froid F circulant à l'extérieur du turboréacteur 5. La nacelle 3 adopte classiquement une forme généralement tubulaire d'axe longitudinal 9. La nacelle 3 comprend un capotage externe 11 pouvant recevoir un dispositif d'inversion de poussée (non représenté) et une structure interne fixe 13 définissant un carénage du turboréacteur 5. La structure interne fixe 13 définit, avec le capotage externe 11, un canal annulaire 15 d'écoulement du flux d'air froid F, ou flux secondaire, circulant à l'extérieur du turboréacteur 5. Le flux d'air froid s'écoule de l'amont vers l'aval de l'ensemble propulsif.

Le capotage externe 11 de la nacelle comprend une structure 17 présentant une pluralité d'ouvertures 19 (une ouverture 19 est visible à la figure 3) réparties sur la circonférence de la nacelle. Le capotage externe 11 de la nacelle comporte en outre une pluralité de panneaux 21, encore parfois appelés « portes » ou encore « volets », positionnés au niveau des ouvertures 19 du capotage. Les panneaux 21 sont conçus pour obturer totalement les ouvertures 19 correspondantes du capotage externe 11. Grâce à un système d'actionnement selon l'invention détaillé ci-après, les panneaux sont aptes à alternativement obturer totalement ou partiellement leurs ouvertures 19 correspondantes.

La structure 17 du capotage externe 11 de la nacelle peut être fixe relativement au reste de la nacelle dans le cas d'une nacelle dite « lisse », c'est-à-dire dépourvue de moyens d'inversion de poussée. Lorsque la nacelle est équipée d'un dispositif d'inversion de poussée, le capotage externe 11 constitue un capot coulissant du dispositif d'inversion de poussée, et la structure 17 est alors mobile par rapport au reste de la nacelle.

Lorsqu'un panneau 21 obture totalement l'ouverture 19 correspondante, on dit qu'il se trouve dans une position de fermeture. Dans cette position représentée à la figure 2, la totalité du flux d'air secondaire F s'écoulant dans le canal annulaire 15 s'échappe par l'aval de la nacelle.

Lorsqu'un panneau 21 obture seulement partiellement l'ouverture 19 correspondante, on dit qu'il se trouve dans une position d'ouverture. Dans cette position représentée à la figure 3, une partie F' du flux d'air secondaire F s'écoulant dans le canal annulaire 15 peut passer à travers l'ouverture 19.

Chaque panneau 21 peut être associé à son propre système d'actionnement selon l'invention, si bien que chaque panneau peut se trouver dans l'une ou l'autre des positions d'ouverture ou de fermeture indépendamment de la position des panneaux voisins.

En variante, un système de synchronisation du mouvement peut être prévu pour imprimer la position de l'un des panneaux de la nacelle aux panneaux voisins.

Un panneau 21 constitue typiquement un panneau de tuyère d'éjection 23 du flux d'air secondaire (visible à la figure 1), tuyère pouvant venir en complément d'une tuyère primaire 25 (visible à la figure 1) canalisant le flux d'air chaud. La section optimale de la tuyère d'éjection du flux d'air secondaire peut alors être adaptée en fonction des différentes phases de vol, à savoir les phases de décollage, de montée, de croisière, de descente et d'atterrissage de l'avion.

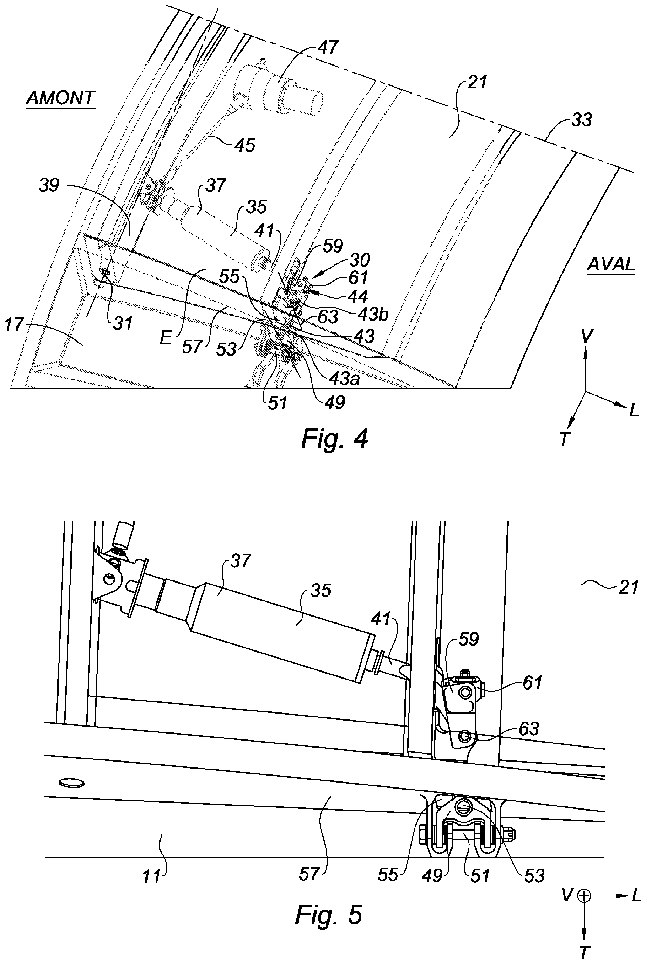

Le système d'actionnement selon un premier mode de réalisation de l'invention va à présent être décrit en référence aux figures 4 à 9.

On se réfère aux figures 4 à 6 sur lesquelles on a représenté une partie du panneau 21 maintenu en position de fermeture sur la structure 17 du capotage externe de la nacelle par un système d'actionnement 30 de l'invention.

Dans ce premier mode de réalisation, le système d'actionnement 30 est conçu pour verrouiller le panneau 21 en position de fermeture et pour faire pivoter le panneau 21 autour d'un axe 31 sensiblement transverse à l'axe longitudinal de la nacelle lorsque le passage du panneau entre sa position de fermeture et sa position d'ouverture est commandé.

Sur la figure 4, on a représenté une moitié seulement du panneau 21 maintenu en position de fermeture sur la structure 17 par le système de d'actionnement 30. Un deuxième système d'actionnement 30' peut en outre être prévu par symétrie par rapport à l'axe de symétrie 33 du panneau 21, permettant d'améliorer le maintien du panneau en position de fermeture et son déplacement.

Le système d'actionnement 30 comporte un actionneur 35 linéaire dont un corps fixe 37 est attaché à une paroi amont 39 du panneau 21 et une tige mobile 41 est attachée à une bielle latérale 43 du système d'actionnement par l'intermédiaire d'un système de renvoi de mouvement 44 décrit ci-après. L'actionneur 35 linéaire peut être typiquement constitué par un vérin électrique dont la tige est mise en mouvement par un arbre 45 d'un moteur électrique 47. Alternativement, l'actionneur linéaire peut être constitué par un vérin hydraulique ou encore pneumatique (non représentés).

Une première extrémité 43a de la bielle latérale 43 est reliée à la structure 17 du capotage externe de la nacelle. Pour ce faire, la structure 17 est munie d'une chape 49 montée pivotante sur un premier axe de pivotement 51 sensiblement parallèle à l'axe longitudinal de la nacelle, laquelle chape reçoit l'extrémité 43a de la bielle latérale 43.

Ainsi, la bielle latérale est montée pivotante autour du premier axe de pivotement 51 sensiblement parallèle à l'axe longitudinal de la nacelle.

La bielle latérale est en outre montée pivotante autour d'un deuxième axe de pivotement 53 de la chape 49, sensiblement perpendiculaire au premier axe de pivotement 51, de sorte que la bielle latérale est susceptible de pivoter par rapport à la structure du capotage externe qui avoisine les panneaux 21, à la fois autour du premier axe de pivotement 51 et autour du deuxième axe de pivotement 53.

La bielle latérale 43 traverse en outre une lumière 55 en forme de trou oblong, sensiblement profilée dans une paroi latérale 57 du panneau 21. Comme représenté aux figures, on entend par « paroi latérale » du panneau une paroi du panneau dont sa surface s'inscrit sensiblement dans un plan (L, V). Plus précisément la paroi latérale 57 est sensiblement dans un plan perpendiculaire à l'axe 31 de rotation de la porte 21, alors que la paroi amont 39 du panneau, transverse aux parois latérales 57, s'inscrit sensiblement dans un plan (T, V). Il peut à cet effet être noté que le panneau 21 comporte une paroi amont 39 et deux parois latérales 57, ces deux parois restant sensiblement parallèles, puisque perpendiculaires à l'axe de rotation 31 de la porte 21.

Une deuxième extrémité 43b de la bielle latérale 43 est reliée par une liaison rotule au système de renvoi de mouvement 44 attaché au panneau mobile et en prise avec la tige mobile 41 de l'actionneur 35.

S'agissant du dispositif de renvoi de mouvement, il comprend une chape 59 ou basculeur, attachée d'une part à la paroi latérale 57 du panneau 21 et d'autre part à l'extrémité de la tige mobile 41 de l'actionneur 35. Cette chape reçoit un croisillon 61 de type « cardan » sur lequel est montée via une liaison rotule la deuxième extrémité 43b de la bielle latérale 43.

La chape 59 est montée pivotante sur un axe 63, sensiblement vertical et sensiblement parallèle à l'axe 53 autour duquel la chape 49 est montée pivotante.

L'ensemble des éléments qui constituent le système d'actionnement sont situés dans un espace interne E du panneau 21 défini par les parois latérales 57 et par la paroi amont 39 du panneau, à l'exception de la bielle latérale 43 qui se trouve contenue seulement en partie dans l'espace E du panneau 21, puisque la bielle latérale 43 traverse la lumière 55 profilée sur la paroi latérale 57 du panneau.

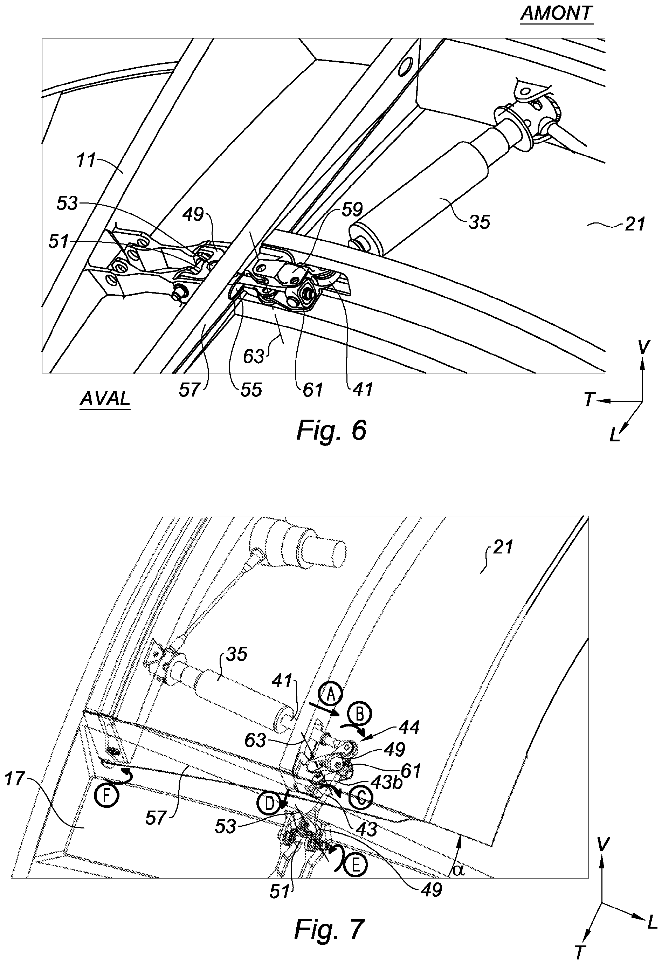

Le fonctionnement du système d'actionnement du premier mode de réalisation de l'invention va à présent être décrit en référence aux figures 7 à 9 qui illustrent le panneau 21 en position d'ouverture.

Le passage de la position de fermeture du panneau, représentée aux figures 4 à 9, vers la position d'ouverture de ce panneau, est réalisé en commandant l'allongement de la tige 41 de l'actionneur 35 (flèche A) attachée à la bielle latérale 43 par l'intermédiaire du système de renvoi de mouvement 44 comprenant la chape 59 ou basculeur et le croisillon 61 sur lequel est montée via une liaison rotule l'extrémité 43b de la bielle latérale 43.

Suite à l'allongement de la tige 41 de l'actionneur 35, la chape 59, ou basculeur, étant attachée à la paroi latérale 57 et montée pivotante sur son axe 63 sensiblement vertical, est mise en rotation (flèche B) dans le référentiel du panneau 21. La rotation de la chape 59, ou basculeur, entraîne la rotation du croisillon 61 attaché à la chape 59 ainsi que la rotation de la bielle latérale 43 (flèche C) atour de son deuxième axe de pivotement 53, la bielle latérale étant montée sur le croisillon par liaison rotule.

Pour une valeur prédéterminée de l'allongement de la tige 41 de l'actionneur 35, la rotation de la chape 59, ou basculeur, et celle du croisillon 61, a pour effet de pousser la bielle latérale 43 (flèche D) en direction de la chape 49 attachée à la structure 17.

La bielle latérale 43 entraîne alors la chape 49 en rotation autour du deuxième axe de pivotement 51 (flèche E), laquelle entraîne le déplacement de la bielle latérale 43 de sorte que la bielle latérale exerce lors de son déplacement une force sur le panneau 21 de façon à entraîner le pivotement du panneau autour de son axe 31 (flèche F).

Le panneau a alors pivoté autour de son axe 31 d'un angle α par rapport à sa position de fermeture, et se trouve ainsi dans sa position d'ouverture.

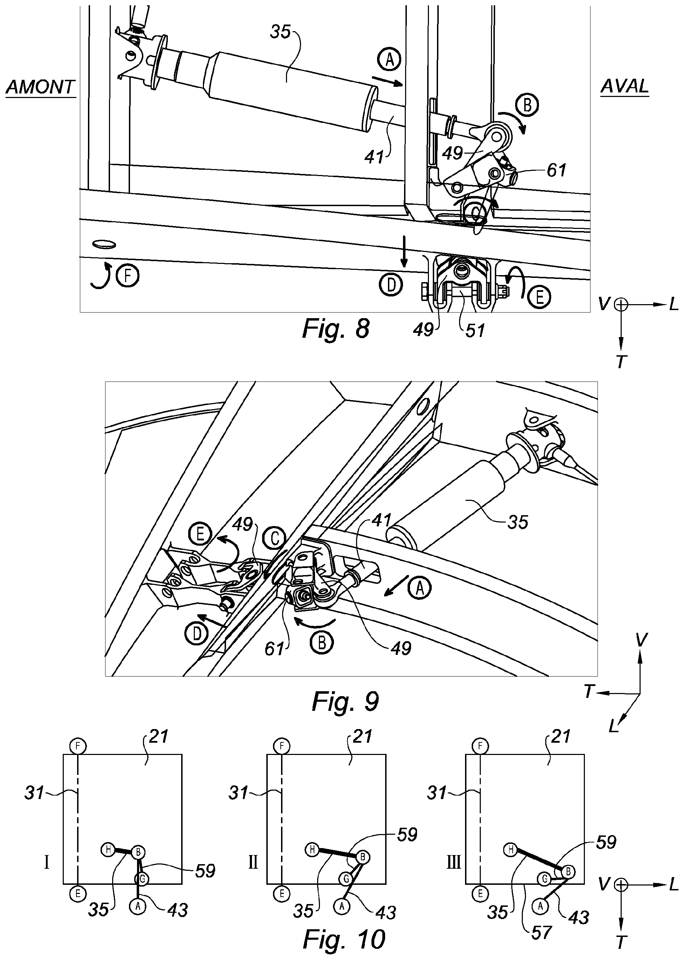

La cinématique du passage de la position de fermeture à la position d'ouverture du panneau 21 va encore être mieux comprise grâce à la figure 10 à laquelle on se réfère à présent.

Sur la figure 10, la phase I illustre le panneau 21 en position de fermeture, la phase II illustre le panneau en position intermédiaire et la phase III illustre le panneau en position d'ouverture.

La droite EF représente l'axe de pivotement 31 du panneau 21. Le segment HB représente l'actionneur linéaire 35. Le segment BG représente la chape 59, ou basculeur, le point G correspondant au point de rattachement de la chape 59 à la paroi latérale 57 du panneau. Le segment BA représente quant à lui la bielle latérale 43, reliée à l'actionneur via le dispositif de renvoi de mouvement comprenant la chape 59. La bielle latérale 43 (segment AB) et la chape 59 (segment GB) forment un système trois points (A, B et G).

Lors de la phase I, les points A, B et G sont tous les trois alignés, c'est-à-dire que la chape 59 et la bielle latérale 43 sont alignées, ce qui permet de supprimer quasiment tout effort sur le système d'actionnement de l'invention.

Lors de la phase II, au cours de laquelle le panneau est en cours de passage de sa position de fermeture de la phase I vers sa position d'ouverture de la phase III, l'actionneur 43 (segment HB) a été allongé par rapport à son allongement représenté à la phase I. La chape 59 (segment BG) est alors entraînée en rotation dans le référentiel du panneau 21.

Lorsque le point B dépasse la position axiale du point G (phase III), le point B se rapproche de la paroi latérale 57 du panneau 21 et une force est exercée sur la bielle latérale 43 (segment BA). La bielle latérale 43, montée sur la chape 49 attachée à la structure 17, pivote alors de sorte que la bielle latérale exerce lors de son déplacement une force sur le panneau 21 de façon à entraîner le pivotement du panneau autour de son axe 31 (segment EF).

Il est à noter que l'axe commun à l'actionneur 35 et à sa tige 41 sera avantageusement aligné avec le point central B du croisillon 61 dans un plan perpendiculaire à l'axe de rotation du basculeur 49. Cette disposition permet de réduire sensiblement les efforts parasites sur le basculeur 49 et ses interfaces avec la porte. Dans ce cas, l'actionneur 35, sa connexion au basculeur 49 et le point B centre du croisillon 61, resteront coplanaires tout au long du mouvement.

Le mode de montage de la bielle 43 peut avoir de nombreuses variantes. On peut citer notamment celle où l'axe 53 est supprimé et où la bielle passe par un trou parallèle à son axe et est bloquée par un pallier permettant sa rotation propre et reprenant l'effort de traction de la bielle du côté de la porte.

Cette variante ne comporte plus de rotule dans le croisillon 61, la rotation de la bielle autour de AB étant reprise par le pallier monte sur la structure du capotage externe qui avoisine les panneaux mobiles. Elle est particulièrement intéressante quand la cinématique de la porte impose à la bielle 43 une rotation importante autour de son axe AB dépassant les capacités de la rotule du cardan 61.

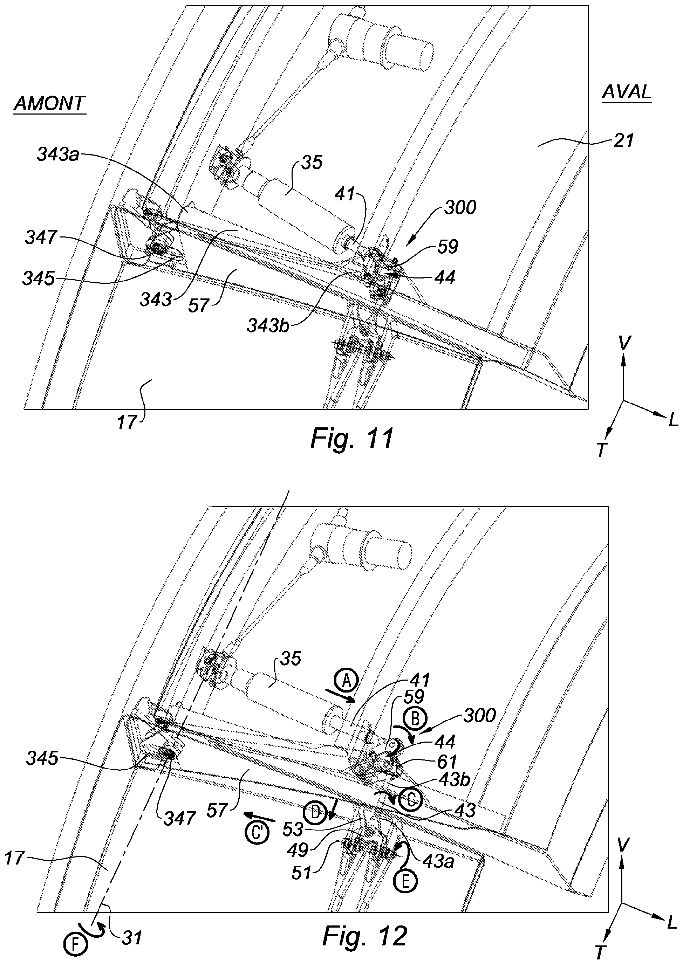

On se réfère à présent aux figures 11 et 12 illustrant un système d'actionnement 300 obtenu selon un deuxième mode de réalisation de l'invention.

Le système d'actionnement 300 du deuxième mode de réalisation est identique au système d'actionnement 30 à ceci près qu'il est en outre conçu pour entraîner le panneau 21 en translation simultanément au mouvement de rotation lorsque le passage du panneau entre sa position de fermeture et sa position d'ouverture est commandé. Plus précisément, le système d'actionnement 300 est conçu pour entraîner le panneau 21 depuis une position aval de la nacelle vers une position amont de la nacelle lorsque le panneau passe de sa position de fermeture vers sa position d'ouverture et, alternativement, depuis une position amont de la nacelle vers une position aval de la nacelle lorsque le panneau passe de sa position d'ouverture vers sa position de fermeture.

Le système d'actionnement 300 comprend à cet effet, outre les organes qui composent le système d'actionnement 30, une bielle longitudinale 343, positionnée sensiblement le long de l'axe longitudinal de la nacelle, dont une première extrémité 343a est reliée à la structure 17 du capotage externe 11 et dont une deuxième extrémité 343b est reliée au système de renvoi de mouvement 44 attaché au panneau mobile 21 et en prise avec la tige mobile 41 de l'actionneur 35. Plus précisément, la deuxième extrémité 343b de la bielle longitudinale 343 est reliée à la chape 59 ou basculeur du dispositif de renvoi de mouvement 44.

Dans ce deuxième mode de réalisation, le panneau 21 est non seulement monté en rotation autour de l'axe 31 sensiblement transverse à l'axe longitudinal de la nacelle, mais il est aussi monté libre en translation le long d'un axe sensiblement parallèle à l'axe longitudinal de la nacelle.

Pour réaliser cette translation, la paroi latérale 57 du panneau mobile 21 comporte un trou oblong 345 dans lequel est monté un galet 347 solidaire de la structure 17 du capotage externe 11 de façon à autoriser la translation du panneau mobile 21 le long d'un axe sensiblement parallèle à l'axe longitudinal de la nacelle.

Bien sûr, tout moyen permettant une translation du panneau mobile le long de l'axe longitudinal de la nacelle peut être envisagé. On retiendra à titre d'exemple l'utilisation d'un rail agencé sur la paroi latérale du panneau, recevant une rotule solidaire de la structure du capotage externe qui avoisine les panneaux mobiles.

Le fonctionnement du système d'actionnement du deuxième mode de réalisation de l'invention va à présent être décrit.

Le passage de la position de fermeture du panneau, représentée à la figure 11, vers la position d'ouverture de ce panneau représentée à la figure 12, est réalisé en commandant l'allongement de la tige 41 de l'actionneur 35 (flèche A) attachée à la bielle latérale 43 et à la bielle longitudinale 343 par l'intermédiaire du système de renvoi de mouvement 44 comprenant la chape 59 ou basculeur et le croisillon 61 sur lequel est montée via une liaison rotule l'extrémité 43b de la bielle latérale 43.

Suite à l'allongement de la tige 41 de l'actionneur 35, la chape 59, ou basculeur, étant attachée à la paroi latérale 57 et montée pivotante sur son axe 63 sensiblement vertical, est mise en rotation (flèche B) dans le référentiel du panneau 21. La rotation de la chape 59, ou basculeur, entraîne la rotation du croisillon 61 attaché à la chape 59 ainsi que la rotation de la bielle latérale 43 (flèche C) atour de son deuxième axe de pivotement 53, la bielle latérale étant montée sur le croisillon par liaison rotule. Simultanément, la rotation de la chape 59 est retenue par la bielle longitudinale 343, laquelle exerce une action sur le panneau 21 tendant à déplacer le panneau 21 vers l'amont de la nacelle (flèche C'). Le trou oblong 345 pratiqué dans la paroi latérale 57 du panneau 21, en prise avec le galet 347 solidaire de la structure 17 du capotage externe 11, autorise la translation du panneau mobile 21 le long d'un axe sensiblement parallèle à l'axe longitudinal de la nacelle.

Pour une valeur prédéterminée de l'allongement de la tige 41 de l'actionneur 35, la rotation de la chape 59, ou basculeur, et celle du croisillon 61, a pour effet de pousser la bielle latérale 43 (flèche D) en direction de la chape 49 attachée à la structure 17. La bielle latérale 43 entraîne alors la chape 49 en rotation autour du deuxième axe de pivotement 51 (flèche E), laquelle entraîne le déplacement de la bielle latérale 43. Le déplacement de la bielle latérale 43 entraîne lors de son déplacement l'exercice d'une force sur le panneau 21 de façon à entraîner le pivotement du panneau autour de son axe 31 (flèche F).

Le panneau a alors pivoté autour de son axe 31 d'un angle α par rapport à sa position de fermeture, et s'est simultanément translaté vers l'amont de la nacelle. Le panneau se trouve ainsi dans sa position d'ouverture.

Dans les deux modes de réalisation du système d'actionnement, le système d'actionnement du panneau est ainsi conçu pour verrouiller le panneau dans sa position de fermeture et pour le déplacer alternativement entre sa position de fermeture et sa position d'ouverture.

Le système d'actionnement de l'invention est conçu de sorte que les efforts d'ouverture du panneau sont repris par les bielles latérales du système d'actionnement et non par l'actionneur longitudinal comme c'est le cas dans l'art antérieur. Les efforts sont donc répartis sensiblement le long de la circonférence de la nacelle. En outre, lorsque le panneau se trouve dans sa position de fermeture, la chape et la bielle latérale du système d'actionnement sont alignées, ce qui permet avantageusement de supprimer quasiment tout effort sur le système d'actionnement. Il peut être avantageux dans certains cas de dépasser ce mécanisme trois points pour stabiliser la porte en position fermée.

Il convient de noter que le système d'actionnement selon l'invention s'applique de manière préférée aux panneaux de tuyère d'éjection du flux d'air secondaire. L'utilisation de ce système d'actionnement pour déplacer une porte d'inverseur de poussée à portes est cependant envisagée. Par ailleurs, lorsque ce système d'actionnement est utilisé pour déplacer des panneaux de tuyère, la nacelle peut bien entendue être pourvue d'un dispositif d'inversion de poussée à grilles ou bien d'un dispositif d'inversion de poussée à portes dont le système d'actionnement des portes peut être celui de la présente invention.

Par ailleurs, la présente invention utilise un moteur central avec un renvoi d'angle menant deux arbres sensiblement disposés symétriquement et entraînant via un autre renvoi d'angle chaque, vers les deux actionneurs 35. Un différentiel peut être également ajouté à la sortie du moteur.

Un autre mode d'actionnement peut également utiliser deux moteurs directement confondus avec les actionneurs 35 sur chaque porte.

Dans un autre mode de réalisation les bielles longitudinales peuvent être remplacées par des actionneurs dont une extrémité est reliée à la structure 17 et l'autre au basculeur 49. Dans ce cas les actionneurs 35 sont remplacés par des bielles fixes. Cette configuration en général moins avantageuse du point de vue des efforts sur les actionneurs peut néanmoins s'avérer intéressante dans certains cas de lignes aérodynamiques spécifiques.

## Revendications

1. Nacelle (3) pour turboréacteur (5) d'aéronef, comprenant :
- un capotage externe (11), comprenant :
∘ une structure (17), comprenant au moins une ouverture (19),
∘ au moins un panneau (21), au moins monté pivotant autour d'un axe (31) entre une position de fermeture selon laquelle il obture ladite ouverture et une position d'ouverture selon laquelle il autorise le passage d'une partie (F') d'un flux d'air secondaire (F) à travers ladite ouverture, le flux d'air secondaire s'écoulant dans un canal annulaire (15) défini entre ledit capotage externe (11) et une structure interne fixe (13) de la nacelle définissant un carénage du turboréacteur (5),
- un système d'actionnement (30, 300) du panneau (21), conçu pour verrouiller le panneau dans ladite position de fermeture et pour déplacer ledit panneau alternativement entre ladite position de fermeture et ladite position d'ouverture,
ladite nacelle (3) étant **caractérisée en ce que** ledit système d'actionnement (30, 300) comprend :
- au moins une bielle latérale (43), d'une part reliée au panneau (21) et d'autre part reliée à la structure (17) du capotage externe (11), ladite bielle latérale (43) étant montée pivotante par rapport à la structure (17), d'une part autour d'un premier axe de pivotement (51) sensiblement parallèle à un axe longitudinal (9) de la nacelle, et d'autre part autour d'un deuxième axe de pivotement (53) sensiblement perpendiculaire au premier axe de pivotement (51),
- un actionneur linéaire (35), attaché à ladite bielle latérale (43), susceptible de passer alternativement entre une position rétractée et une position allongée,
le système d'actionnement (30) étant en outre conçu pour déplacer la bielle latérale (43) lors de l'allongement dudit actionneur (35), entraînant le pivotement de ladite bielle latérale (43) autour desdits premier (51) et deuxième (53) axes de pivotement, et pour que la bielle latérale (43), en appui sur la structure (17), exerce, lors de son déplacement, une force sur le panneau (21), entraînant un pivotement dudit panneau autour de son axe (31).

2. Nacelle (3) selon la revendication 1, **caractérisée en ce que** l'actionneur (35) est attaché à la bielle latérale au moyen d'un dispositif de renvoi de mouvement (44) comprenant:
- une chape (59) attachée d'une part au panneau (21) et montée pivotante autour d'un axe (63) sensiblement vertical, une tige mobile de l'actionneur (35) étant attaché à ladite chape ; et
- un croisillon (61) sur lequel est montée via une liaison rotule une deuxième extrémité (43b) de la bielle latérale (43).

3. Nacelle (3) selon l'une des revendications 1 ou 2, dans laquelle le panneau (21) est en outre monté libre en translation selon un axe sensiblement parallèle à un axe longitudinal de la nacelle, **caractérisée en ce que** le système d'actionnement (300) est en outre conçu pour entraîner alternativement le panneau (21) depuis une position aval vers une position amont de la nacelle lorsque le panneau passe de sa position de fermeture vers sa position d'ouverture.

4. Nacelle (3) selon les revendications 2 et 3, **caractérisée en ce qu'**au moins une paroi latérale (57) du panneau (21) comporte un trou oblong (345) dans lequel est monté un galet (347) solidaire de la structure (17) du capotage externe (11), de sorte à autoriser la translation du panneau mobile (21) le long d'un axe sensiblement parallèle à l'axe longitudinal de la nacelle, et **en ce que** le système d'actionnement (300) comprend une bielle longitudinale (343) dont une première extrémité (343a) est reliée à ladite structure (17) et dont une deuxième extrémité (343b) est reliée à la chape (59) du dispositif de renvoi de mouvement (44).

5. Nacelle (3) selon les revendications 2 et 3, **caractérisée en ce qu'**au moins une paroi latérale (57) du panneau (21) comporte un rail recevant une rotule ou un coulisseau solidaire de la structure (17) du capotage externe (11), de sorte à autoriser la translation du panneau mobile (21) le long d'un axe sensiblement parallèle à l'axe longitudinal de la nacelle, et **en ce que** le système d'actionnement (300) comprend une bielle longitudinale (343) dont une première extrémité (343a) est reliée à ladite structure (17) et dont une deuxième extrémité (343b) est reliée à la chape (59) du dispositif de renvoi de mouvement (44).

6. Nacelle (3) selon l'une des revendications 1 à 5, **caractérisée en ce qu'**une première extrémité (43a) de la bielle latérale (43) est reliée à la structure (17) du capotage externe (11) par l'intermédiaire d'une chape (49) montée pivotante autour du premier axe de pivotement (51).

7. Nacelle (3) selon la revendication 6, **caractérisée en ce que** la bielle latérale (43) est en outre montée pivotante par rapport à la chape (49) autour du deuxième axe de pivotement (53).

8. Nacelle (3) selon l'une quelconque des revendications 1 à 7, **caractérisée en ce que** le panneau (21) comporte une lumière (55) profilée sur au moins une paroi latérale (57) du panneau (21), et **en ce que** la bielle latérale (43) traverse ladite lumière (55).

9. Nacelle (3) selon l'une quelconque des revendications 1 à 8, **caractérisée en ce que** l'actionneur (35) est attaché à une paroi amont (39) du panneau (21).

10. Nacelle (3) selon l'une quelconque des revendications 2 à 9, **caractérisée en ce que** l'actionneur (35) et le dispositif de renvoi de mouvement (44) sont situés dans un espace interne (E) du panneau (21).

11. Nacelle (3) selon l'une quelconque des revendications 1 à 10, **caractérisée en ce que** chaque panneau (21) comporte deux systèmes d'actionnement symétriques par rapport à un axe de symétrie du panneau, comprenant chacun leur propre moteur d'actionnement hydraulique, électrique ou aéraulique.

12. Nacelle (3) selon l'une quelconque des revendications 1 à 11, dans laquelle le panneau (21) est en outre mû en translation selon une direction sensiblement parallèle à un axe longitudinal de la nacelle, **caractérisée en ce que** le système d'actionnement (300) est en outre conçu pour entraîner alternativement le panneau (21) depuis une position aval vers une position amont de la nacelle lorsque le panneau passe de sa position de fermeture vers sa position d'ouverture.

13. Nacelle (3) selon l'une quelconque des revendications 1 à 12, **caractérisée en ce que** le panneau (21) est un panneau d'une tuyère d'éjection (23) d'un flux d'air secondaire.

14. Nacelle (3) selon les revendications 1 à 13 **caractérisée en ce que** le capotage externe (11) forme un capot coulissant d'un dispositif d'inversion de poussée.

## Patentansprüche

1. Gondel (3) für ein Turbostrahltriebwerk (5) eines Flugzeugs, Folgendes umfassend:
- eine äußere Abdeckung (11), Folgendes umfassend:
° eine Struktur (17), mindestens eine Öffnung (19) umfassend,
° mindestens eine Platte (21), mindestens um eine Achse (31) zwischen einer Schließposition, in der sie die Öffnung verschließt, und einer Öffnungsposition drehend montiert, in der sie den Durchgang eines Teils (F') eines Sekundärluftstroms (F) durch die Öffnung hindurch erlaubt, wobei der Sekundärluftstrom in einem ringförmigen Kanal (15) strömt, der zwischen der äußeren Abdeckung (11) und einer feststehenden inneren Struktur (13) der Gondel definiert ist, die eine Verkleidung des Turbostrahltriebwerks (5) definiert,
- ein Betätigungssystem (30, 300) der Platte (21), das gestaltet ist, um die Platte in der Schließposition zu verriegeln und um die Platte abwechselnd zwischen der Schließposition und der Öffnungsposition zu verschieben,
wobei die Gondel (3) **dadurch gekennzeichnet ist, dass** das Betätigungssystem (30, 300) Folgendes umfasst:
- mindestens eine seitliche Triebstange (43), die einerseits mit der Platte (21) verbunden ist, und andererseits mit der Struktur (17) der äußeren Abdeckung (11) verbunden ist, wobei die seitliche Triebstange (43) in Bezug auf die Struktur (17) einerseits um eine erste Drehachse (51) im Wesentlichen parallel zu einer Längsachse (9) der Gondel, und andererseits um eine zweite Drehachse (53) im Wesentlichen senkrecht zu der ersten Drehachse (51) drehend montiert ist,
- einen Linearbetätiger (35), der an der seitlichen Triebstange (43) angebracht ist, und abwechselnd zwischen einer eingezogenen Position und einer ausgefahrenen Position übergehen kann,
wobei das Betätigungssystem (30) weiter gestaltet ist, um die seitliche Triebstange (43) beim Ausfahren des Betätigers (35) zu verschieben, wodurch das Drehen der seitlichen Triebstange (43) um die erste (51) und zweite (53) Drehachse angetrieben wird, und damit die seitliche Triebstange (43) auf Anlage an der Struktur (17) bei ihrer Verschiebung eine Kraft auf die Platte (21) ausübt, wodurch ein Drehen der Platte um ihre Achse (31) angetrieben wird.

2. Gondel (3) nach Anspruch 1, **dadurch gekennzeichnet, dass** der Betätiger (35) mithilfe einer Bewegungsumlenkvorrichtung (44) an der seitlichen Triebstange angebracht ist, Folgendes umfassend:
- einen Gabelkopf (59), der einerseits an der Platte (21) angebracht ist und um eine im Wesentlichen vertikale Achse (63) drehend montiert ist, wobei eine bewegliche Stange des Betätigers (35) an dem Gabelkopf angebracht ist; und
- ein Kreuzstück (61), auf dem über eine Kugelgelenksverbindung ein zweites Ende (43b) der seitlichen Triebstange (43) montiert ist.

3. Gondel (3) nach einem der Ansprüche 1 oder 2, wobei die Platte (21) weiter entlang einer Achse im Wesentlichen parallel zu einer Längsachse der Gondel im Vorschub frei montiert ist, **dadurch gekennzeichnet, dass** das Betätigungssystem (300) weiter gestaltet ist, um abwechselnd die Platte (21) von einer stromabwärtigen Position in eine stromaufwärtige Position der Gondel anzutreiben, wenn die Platte von ihrer Schließposition in ihre Öffnungsposition übergeht.

4. Gondel (3) nach den Ansprüchen 2 und 3, **dadurch gekennzeichnet, dass** mindestens eine Seitenwand (57) der Platte (21) ein Langloch (345) beinhaltet, in dem eine Rolle (347) montiert ist, die fest mit der Struktur (17) der äußeren Abdeckung (11) verbunden ist, um den Vorschub der beweglichen Platte (21) entlang einer Achse im Wesentlichen parallel zu der Längsachse der Gondel freizugeben, und dadurch, dass das Betätigungssystem (300) eine längs gerichtete Triebstange (343) umfasst, deren erstes Ende (343a) mit der Struktur (17) verbunden ist, und deren zweites Ende (343b) mit dem Gabelkopf (59) der Bewegungsumlenkvorrichtung (44) verbunden ist.

5. Gondel (3) nach den Ansprüchen 2 und 3, **dadurch gekennzeichnet, dass** mindestens eine Seitenwand (57) der Platte (21) eine Schiene beinhaltet, die ein Kugelgelenk oder einen Stößel aufnimmt, das/der fest mit der Struktur (17) der äußeren Abdeckung (11) verbunden ist, um den Vorschub der beweglichen Platte (21) entlang einer Achse im Wesentlichen parallel zur Längsachse der Gondel freizugeben, und dadurch, dass das Betätigungssystem (300) eine längs gerichtete Triebstange (343) umfasst, deren erstes Ende (343a) mit der Struktur (17) verbunden ist, und deren zweites Ende (343b) mit dem Gabelkopf (59) der Bewegungsumlenkvorrichtung (44) verbunden ist.

6. Gondel (3) nach einem der Ansprüche 1 bis 5, **dadurch gekennzeichnet, dass** ein erstes Ende (43a) der seitlichen Triebstange (43) anhand eines Gabelkopfes (49), der um die erste Drehachse (51) drehend montiert ist, mit der Struktur (17) der äußeren Abdeckung (11) verbunden ist.

7. Gondel (3) nach Anspruch 6, **dadurch gekennzeichnet, dass** die seitliche Triebstange (43) weiter in Bezug auf den Gabelkopf (49) um die zweite Drehachse (53) drehend montiert ist.

8. Gondel (3) nach einem der Ansprüche 1 bis 7, **dadurch gekennzeichnet, dass** die Platte (21) eine profilierte längliche Öffnung (55) an mindestens einer Seitenwand (57) der Platte (21) beinhaltet, und dadurch, dass die seitliche Triebstange (43) durch die längliche Öffnung (55) hindurchführt.

9. Gondel (3) nach einem der Ansprüche 1 bis 8, **dadurch gekennzeichnet, dass** der Betätiger (35) an einer stromaufwärtigen Wand (39) der Platte (21) angebracht ist.

10. Gondel (3) nach einem der Ansprüche 2 bis 9, **dadurch gekennzeichnet, dass** sich der Betätiger (35) und die Bewegungsumlenkvorrichtung (44) in einem Innenraum (E) der Platte (21) befinden.

11. Gondel (3) nach einem der Ansprüche 1 bis 10, **dadurch gekennzeichnet, dass** jede Platte (21) zwei in Bezug auf eine Symmetrieachse der Platte symmetrische Betätigungssysteme beinhaltet, die jeweils ihren eigenen hydraulischen, elektrischen oder aeraulischen Betätigungsmotor umfassen.

12. Gondel (3) nach einem der Ansprüche 1 bis 11, wobei die Platte (21) weiter in einer Richtung im Wesentlichen parallel zu einer Längsachse der Gondel im Vorschub bewegt wird, **dadurch gekennzeichnet, dass** das Betätigungssystem (300) weiter gestaltet ist, um die Platte (21) abwechselnd von einer stromabwärtigen Position in eine stromaufwärtige Position der Gondel anzutreiben, wenn die Platte von ihrer Schließposition in ihre Öffnungsposition übergeht.

13. Gondel (3) nach einem der Ansprüche 1 bis 12, **dadurch gekennzeichnet, dass** die Platte (21) eine Platte einer Auswurfdüse (23) eines Sekundärluftstroms ist.

14. Gondel (3) nach den Ansprüchen 1 bis 13, **dadurch gekennzeichnet, dass** die äußere Abdeckung (11) eine gleitende Haube einer Schubumkehrvorrichtung ist.

## Claims

1. A nacelle (3) for an aircraft turbojet engine (5), comprising:
- an outer cowling (11), comprising:
∘ a structure (17), comprising at least one opening (19),
∘ at least one panel (21), at least pivotally mounted about an axis (31) between a closure position according to which it seals said opening and an opening position according to which it enables the passage of a portion (F') of a secondary air flow (F) through said opening, the secondary air flow flowing in an annular channel (15) defined between said outer cowling (11) and an inner fixed structure (13) of the nacelle defining a fairing of the turbojet engine (5),
- a system (30, 300) for actuating the panel (21), designed so as to lock the panel in said closure position and to alternately displace said panel between said closure position and said opening position,
said nacelle (3) being **characterized in that** said actuation system (30, 300) comprises:
- at least one lateral connecting rod (43), on the hand linked to the panel (21) and on the other hand linked to the structure (17) of the outer cowling (11), said lateral connecting rod (43) being pivotally mounted relative to the structure (17), on the one hand about a first pivot axis (51) substantially parallel to a longitudinal axis (9) of the nacelle and, on the other hand, about a second pivot axis (53) substantially perpendicular to the first pivot axis (51),
- a linear actuator (35), attached to said lateral connecting rod (43), prone to alternately switch between a retracted position and an elongated position,
the actuation system (30) being further designed so as to displace the lateral connecting rod (43) during the extension of said actuator (35), causing the pivoting of said lateral connecting rod (43) about said first (51) and second (53) pivot axes, and so that the lateral connecting rod (43), bearing on the structure (17), exerts, during the displacement thereof, a force on the panel (21), causing a pivoting of said panel about its axis (31).

2. The nacelle (3) according to claim 1, **characterized in that** the actuator (35) is attached to the lateral connecting rod by means of a movement transmission device (44) comprising:
- a clevis (59) attached on the one hand to the panel (21) and pivotally mounted about a substantially vertical axis (63), a movable rod of the actuator (35) being attached to said clevis; and
- a crosspiece (61) on which a second end (43b) of the lateral connecting rod (43) is mounted through a ball-joint connection.

3. The nacelle (3) according to any of claims 1 or 2, wherein the panel (21) is further mounted free to translate according to an axis substantially parallel to a longitudinal axis of the nacelle, **characterized in that** the actuation system (300) is further designed so as to alternately drive the panel (21) from a downstream position towards an upstream position of the nacelle when the panel switches from its closure position towards its opening position.

4. The nacelle (3) according to claims 2 and 3, **characterized in that** at least one lateral wall (57) of the panel (21) includes an oblong hole (345) in which a roller (347) secured to the structure (17) of the outer cowling (11) is mounted, so as to enable the translation of the movable panel (21) along an axis substantially parallel to the longitudinal axis of the nacelle, and **in that** the actuation system (300) comprises a longitudinal connecting rod (343) a first end (343a) of which is linked to said structure (17) and a second end (343b) of which is linked to the clevis (59) of the movement transmission device (44).

5. The nacelle (3) according to claims 2 and 3, **characterized in that** at least one lateral wall (57) of the panel (21) includes a rail receiving a ball-joint or a slider secured to the structure (17) of the outer cowling (11), so as to enable the translation of the movable panel (21) along an axis substantially parallel to the longitudinal axis of the nacelle, and **in that** the actuation system (300) comprises a longitudinal connecting rod (343) a first end (343a) of which is linked to said structure (17) and a second end (343b) of which is linked to the clevis (59) of the movement transmission device (44).

6. The nacelle (3) according to any of claims 1 to 5, **characterized in that** a first end (43a) of the lateral connecting rod (43) is linked to the structure (17) of the outer cowling (11) via a clevis (49) pivotally mounted about the first pivot axis (51).

7. The nacelle (3) according to claim 6, **characterized in that** the lateral connecting rod (43) is further pivotally mounted relative to the clevis (49) about the second pivot axis (53).

8. The nacelle (3) according to any one of claims 1 to 7, **characterized in that** the panel (21) includes a profiled aperture (55) on at least one lateral wall (57) of the panel (21), and **in that** the lateral connecting rod (43) crosses said aperture (55).

9. The nacelle (3) according to any one of claims 1 to 8, **characterized in that** the actuator (35) is attached to an upstream wall (39) of the panel (21).

10. The nacelle (3) according to any one of claims 2 to 9, **characterized in that** the actuator (35) and the movement transmission device (44) are located in an inner space (E) of the panel (21).

11. The nacelle (3) according to any one of claims 1 to 10, **characterized in that** each panel (21) includes two actuation systems symmetrical with respect to an axis of symmetry of the panel, each comprising their own hydraulic, electric or pneumatic actuation motor.

12. The nacelle (3) according to any one of claims 1 to 11, wherein the panel (21) is further moved in translation according to a direction substantially parallel to a longitudinal axis of the nacelle, **characterized in that** the actuation system (300) is further designed so as to alternately drive the panel (21) from a downstream position towards an upstream position of the nacelle when the panel switches from its closure position towards its opening position.

13. The nacelle (3) according to any one of claims 1 to 12, **characterized in that** the panel (21) is a panel of an ejection nozzle (23) of a secondary air flow.

14. The nacelle (3) according to claims 1 to 13, **characterized in that** the outer cowling (11) forms a sliding cowl of a thrust reverser device.
